# EUROPÄISCHE PATENTSCHRIFT

(11) **EP 4 464 840 B1**
(45) Veröffentlichungstag und Bekanntmachung des Hinweises auf die Patenterteilung: **30.09.2026**
(21) Anmeldenummer: 24175324.3
(22) Anmeldetag: 13.05.2024
(51) Int. Cl.: D21J 3/00

(54) **VERFAHREN ZUR TEMPERATURREGELUNG IN EINEM FORMWERKZEUG ZUR HERSTELLUNG VON FORMTEILEN AUS EINEM FASERHALTIGEN MATERIAL SOWIE FORMSTATION MIT EINEM FORMWERKZEUG**
METHOD FOR TEMPERATURE CONTROL IN A MOULD FOR PRODUCING MOULDED PARTS FROM A FIBROUS MATERIAL AND MOULDING STATION COMPRISING A MOULD
PROCÉDÉ DE RÉGULATION DE TEMPÉRATURE DANS UN MOULE POUR LA FABRICATION DE PIÈCES MOULÉES EN MATÉRIAU FIBREUX ET POSTE DE MOULAGE DOTÉ D'UN MOULE

(30) Priorität: 16.05.2023 DE 102023112895
(43) Veröffentlichungstag der Anmeldung: 20.11.2024
(73) Patentinhaber: KIEFEL GmbH, 83395 Freilassing (DE)
(72) Erfinder: Neuhofer, Heinz, 83395 Freilassing (DE)
(74) Vertreter: DTS Patent- und Rechtsanwälte PartmbB

(56) Entgegenhaltungen:
- EP-A1- 4 257 349
- WO-A1-2020/227404
- CN-B- 113 308 946

## Beschreibung

### Technisches Gebiet

Es werden ein Verfahren zur Temperaturregelung in einem Formwerkzeug, das einen Werkzeuggrundkörper und mindestens eine Kavität aufweist, zur Herstellung von Formteilen aus einem faserhaltigen Material sowie eine Formstation mit mindestens einem Formwerkzeug beschrieben.

Faserhaltige Materialen werden vermehrt eingesetzt, um bspw. Verpackungen für Lebensmittel (bspw. Schalen, Kapseln, Boxen, etc.) und Konsumgüter (bspw. elektronische Geräte etc.) sowie Getränkebehälter herzustellen. Es werden auch Alltagsgegenstände, wie bspw. Einwegbesteck und -geschirr, aus faserhaltigem Material hergestellt. Faserhaltige Materialien umfassen natürliche Fasern oder künstliche Fasern. In letzter Zeit wird vermehrt faserhaltiges Material eingesetzt, welches Naturfasern aufweist oder aus solchen besteht, die bspw. aus nachwachsenden Rohstoffen oder Altpapier gewonnen werden können. Die Naturfasern werden in einer sogenannten Pulpe mit Wasser und ggf. weiteren Zusätzen, wie z.B. Stärke, vermischt. Zusätze können zudem Auswirkungen auf die Farbe, die Barriereeigenschaften und mechanische Eigenschaften haben. Diese Pulpe kann einen Anteil von Naturfasern von bspw. 0,1 bis 10 Gew.-% aufweisen. Der Anteil an Naturfasern variiert in Abhängigkeit des Verfahrens, welches zur Herstellung von Verpackungen etc. angewandt wird, und der Produkteigenschaften des herzustellenden Produkts.

### Hintergrund

Die Herstellung von faserhaltigen Produkten aus einer Pulpe erfolgt in der Regel in mehreren Arbeitsschritten. Hierzu weist eine Faserverarbeitungseinrichtung mehrere Stationen bzw. Formstationen auf. In einer Formstation kann bspw. ein Ansaugen von Fasern in einer Kavität eines Ansaugwerkzeugs erfolgen, wodurch ein Vorformling geformt bzw. gebildet wird. Dazu wird die Pulpe in einem Pulpe-Vorrat bereitgestellt und das Ansaugwerkzeug mit mindestens einer Ansaugkavität, dessen Geometrie im Wesentlichen dem herzustellenden Produkt entspricht, zumindest teilweise in die Pulpe getaucht. Während des Eintauchens erfolgt ein Ansaugen über Öffnungen in der Ansaugkavität, die mit einer entsprechenden Saug-Einrichtung in Verbindung stehen, wobei sich Fasern aus der Pulpe an der Oberfläche der Ansaugkavität ansammeln. Die angesaugten Fasern (Filterkuchen) können anschließend über das Ansaugwerkzeug in ein Vorpresswerkzeug gebracht werden, wobei ein Vorformling vorgepresst wird. Hierzu können bspw. elastische Formkörper zum Einsatz kommen, die zum Verpressen aufgeblasen werden und dabei einen Druck auf die Vorformlinge ausüben. Während dieses Vorpressvorgangs werden die Fasern im Vorformling verpresst und der Wassergehalt des Vorformlings reduziert. Danach werden Vorformlinge in einer Heißpresse zu fertigen Formteilen verpresst (Heißpressprozess). Hierbei werden Vorformlinge in ein Heißpresswerkzeug eingebracht, welches bspw. eine untere Werkzeughälfte und eine obere Werkzeughälfte aufweist, die beheizt werden. In dem Heißpresswerkzeug werden die Vorformlinge in einer Kavität unter Wärmeeintrag verpresst, wobei durch den Druck und die Wärme Restfeuchte ausgebracht wird, so dass der Feuchtigkeitsgehalt der Vorformlinge von ca. 60 Gew.-% vor dem Heißpressen auf bspw. 5-10 Gew.-% nach dem Heißpressen reduziert wird.

Ein Heißpresswerkzeug und ein Herstellungsverfahren mit dem vorstehend beschriebenen Heißpressverfahren sind bspw. aus DE 10 2019 127 562 A1 bekannt. Weitere Formstationen aus dem Stand der Technik sind z.B. in CN 113 308 946 B und WO 2020/227404 A1 offenbart.

Im Heißpressprozess von Faserverarbeitungseinrichtungen, in welchen nasses Fasermaterial verarbeitet wird (Wet-Fiber-Prozess), werden Formwerkzeuge aus Aluminium wegen ihres guten Verhältnisses von Wärmeleitung und Festigkeit bevorzugt verwendet. Aluminium-Werkstoffe jeder Güte haben jedoch die Eigenschaft, ihre Dauerhaltbarkeits- und Festigkeitseigenschaften ab ca. 100°C aufwärts drastisch zu verlieren. Üblicherweise finden dabei Trocknungsprozesse in solchen Faserverarbeitungseinrichtungen bei Temperaturen zwischen 150°C und 300°C statt. Jede unnötige Überhitzung der Werkzeugoberfläche führt zwangsweise zur schrittweisen Reduktion der Festigkeiten. Zudem spielt die Gesamtzeit, in der die Aluminium-Werkstoffe in diesen Temperaturbereichen verweilen, eine maßgebliche Rolle für die Standzeiten der Formwerkzeuge.

Daher sollte vermieden werden, das Formwerkzeug unnötig zu heiß verweilen zu lassen. Insbesondere Kavitäten von Formwerkzeugen stehen im Heißpressprozess unter hoher Last, da deren Auflageflächen und Druckzonen stärker belastet werden (geringerer Flächenkontakt im Kraftfluss der Schließkraft) als der Heizblock bzw. der Werkzeuggrundkörper, an dem die Kavitäten angeordnet sind und über den die Beheizung erfolgt.

Bisher wurde in Heißpressstationen eine Temperaturregelung verwendet, welche die Temperatur des Werkzeuggrundkörpers effektiv regelt und die Kavitäten-Temperaturen im Rahmen überwacht. Da sich je nach Heizungskonzept eine Heizquelle nah oder entfernt zur Werkzeugoberfläche des Formwerkzeugs befindet, reagiert die Temperaturregelung nach Prozessstart unterschiedlich schnell auf die sich verändernden Temperaturen an der Kavität. Grundsätzlich erfolgt aufgrund des sich einstellenden Wärmestroms im Prozess (Wärmeabnahme durch Trocknung des Produkts) eine Temperaturverteilung am Formwerkzeug, die sich von der Temperaturverteilung eines Grundzustands völlig unterscheidet. Die Temperaturverteilung ist dabei Folge des Wärmestroms, wobei der Wärmestrom Folge einer konturnahen Abkühlung der Oberfläche bzw. der Trocknung des Produkts ist.

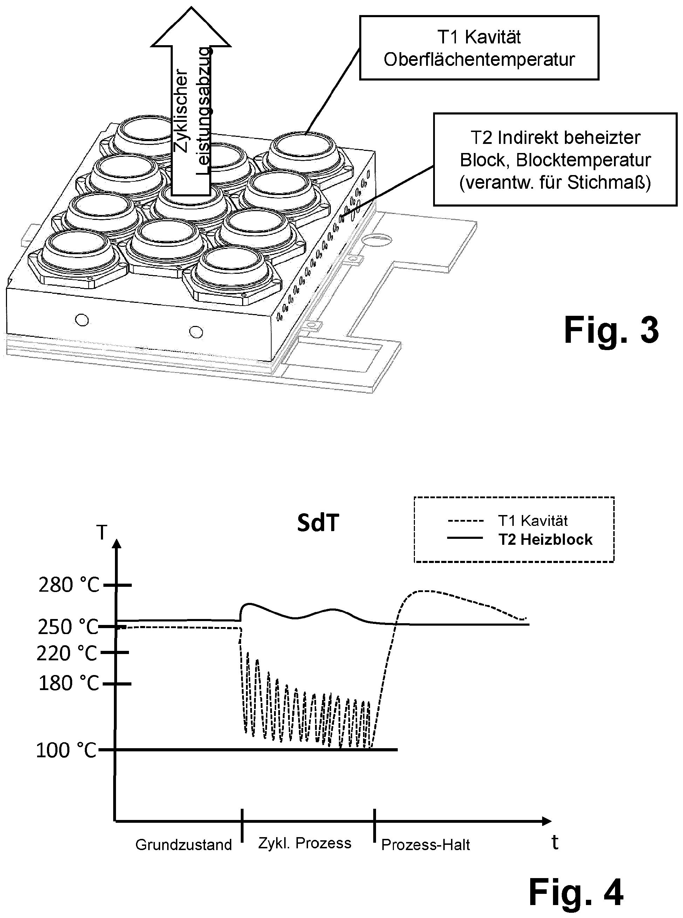

Bislang wurde davon ausgegangen, dass höhere Temperaturen im Heißpressprozess pauschal auch bessere Energieübergänge ermöglichen. Dementsprechend wurden bereits für den Prozessstart möglichst hohe Temperaturen im Grundzustand realisiert. Im weiteren Verlauf des (Dauer-) Prozess bricht die Temperatur aufgrund des schwingenden Wärme-Abzugs (Energieabzugs) an den Kavitäten ein und es stellt sich ein kontinuierlicher Wärmestrom von Heizquelle (Patronen) zur Wärmesenke (Kavität) ein. Im Verlauf der Ausbildung des Wärmestroms registriert die Temperaturregelung die Temperaturänderung und reagiert auf diese Änderung mit dem Anheben der Heizleistung. Der weitere zyklische Temperatureinbruch im Vergleich zum Ausgangszustand wird nun abgefangen und im Gesamtverlauf makroskopisch als "Delle" sichtbar (siehe Fig. 4). Die Kavitäten-Oberflächentemperatur unterscheidet sich nun deutlich von der im Grundzustand. In einem Prozesshalt wird nun der Leistungseintrag gestoppt, und die sich auf dem Weg befindliche Energie im Wärmestrom noch an die Wärmesenke weitergegeben. Es kommt zum sog. Nachfließen von Energie und die Kavitätentemperatur hebt sich deutlich an (je nach auf dem Weg befindlichen Energie, Produktabhängig).

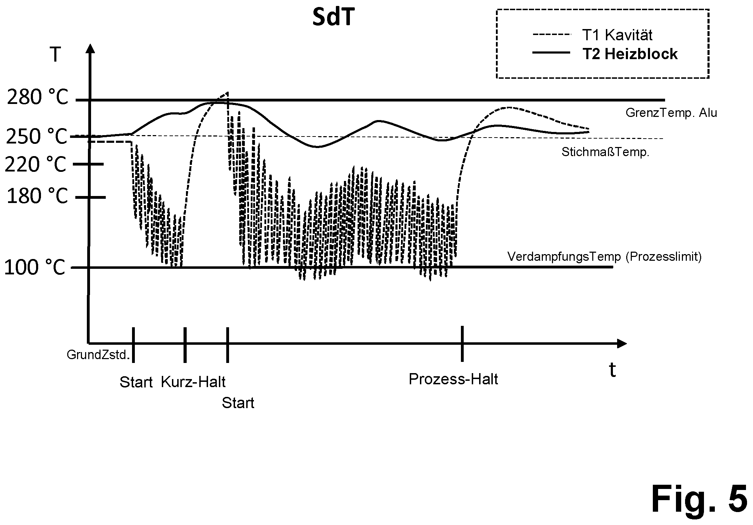

Je nach Abstand der Heizquelle zur Oberfläche existieren Reaktions-Totzeiten der Temperatur bei Leistungseintrag. Deshalb wird bei Prozessstart aktuell ein Prozentsatz der installierten Heizleistung vorgehalten, um den Temperatureinbruch bei Dauerzyklus gering zu halten. Nun kann es jedoch - vor allem im Anfahren der Produkte - passieren, dass der Anwender aufgrund kleiner Prozessfehler mehrfach stoppt und kurz darauf wieder startet. Dabei wird mit jedem wieder Anfahren ein Energieschub (Vorhalt) in Form von Heizleistung an die Kavität abgegeben, der jedoch durch die Produkte (im Prozesshalt) nicht abgenommen wird, wodurch die Kavität daraufhin stark überhitzt (siehe Fig. 5). Sobald der Heißpressprozess wieder gestartet wird, weil alle Parameter prozesstechnisch in Ordnung sind, wird mit einem überhitzten Formwerkzeug gestartet. Binnen einiger Takte fällt die Temperatur der Kavität wieder ab, wobei die Temperatur des Werkzeuggrundkörpers jedoch noch groß genug ist, um die Regelung noch nicht eingreifen zu lassen. In weiterer Folge kommt es zu einer starken Unterkühlung der Kavitäten, sodass der Prozess dauerhaft instabil läuft und sich erst nach Stunden einpendeln kann. Dies hat negative Auswirkungen auf die Produktqualität, da kein Zyklus dem vorhergehenden bzgl. der Energieübertragung gleicht.

### Aufgabe

Demgegenüber besteht die Aufgabe darin, eine Lösung anzugeben, welche die Probleme des Stands der Technik behebt und eine Reduzierung der Anfahrzeiten von Heißpressprozessen bereitstellt, wobei in kurzer Zeit und ohne maßgeblichen Ausschuss ein Heißpressprozess gestartet werden kann.

### Lösung

Die vorstehend genannte Aufgabe wird durch ein Verfahren zur Temperaturregelung in einem Formwerkzeug, das einen Werkzeuggrundkörper und mindestens eine Kavität aufweist, zur Herstellung von Formteilen aus einem faserhaltigen Material gelöst, wobei Vorformlinge mit einem Feuchtigkeitsgehalt größer 30 Gew.-% unter Druck und Temperatureintrag zu Formteilen verpresst werden, wobei die Temperatur des Formwerkzeugs im Betrieb zwischen einer Standby-Temperatur und einer maximalen Produktionstemperatur eines Produktionstemperaturbereichs geregelt wird, wobei die Standby-Temperatur kleiner ist wie eine minimale Produktionstemperatur, wobei das Formwerkzeug durch Wärmeeintrag auf einen Grundzustand gehalten wird, wobei ein Formprozess aus dem Grundzustand, bei welchem das Formwerkzeug mindestens die Standby-Temperatur aufweist, in den Produktionstemperaturbereich durch einen zusätzlichen Wärmeeintrag gebracht wird, wobei der Produktionstemperaturbereich zwischen der minimalen Produktionstemperatur und der maximalen Produktionstemperatur liegt, wobei nach Erreichen der minimalen Produktionstemperatur im Formwerkzeug ein Formprozess gestartet und der zusätzliche Wärmeeintrag in das Formwerkzeug nur während des Formprozesses aufrechterhalten wird.

Damit wird eine Temperaturregelung bereitgestellt, welche es ermöglicht, aus einem Grundzustand einen Heißpressprozess (Formprozess) zu starten, wobei lediglich ein verhältnismäßig geringer Wärmeeintrag erfolgen muss. Gegenüber dem Stand der Technik wird die Temperatur im Formwerkzeug bzw. im Werkzeuggrundkörper nicht gleich zu Beginn des Formprozesses auf die maximale Produktionstemperatur gebracht, sondern erst beim Übergang vom Grundzustand in einen Produktionszustand, so dass es zu keinem starken Abfallen der Oberflächentemperatur der mindestens einen Kavität kommt. Vielmehr weist die Oberflächentemperatur der mindestens einen Kavität verhältnismäßig früh bzw. unmittelbar nach dem Übergang vom Grundzustand in den Produktionszustand eine Temperatur auf, die ausreichend für den Formprozess ist und im Stand der Technik erst nach mehreren Stunden erreicht wird.

In weiteren Ausführungen können der Wärmeintrag zur Erreichung des Grundzustands und der zusätzliche Wärmeeintrag zum Erreichen einer Produktionstemperatur innerhalb des Produktionstemperaturbereichs durch Beheizen des Werkzeuggrundkörpers erfolgen.

In weiteren Ausführungen kann während einer Unterbrechung des Formprozesses der zusätzliche Wärmeeintrag in das Formwerkzeug unterbrochen und das Formwerkzeug für die Dauer der Unterbrechung gekühlt werden. Durch die Kühlung kann das Formwerkzeug auf einfache Art im Produktionstemperaturbereich gehalten werden. Die Kühlung ersetzt dabei die natürliche Kühlung, welche durch feuchte Vorformlinge bereitgestellt werden würde. Dementsprechend wird die Kühlung nach Maßgabe der erforderlichen Kühlleistung ermittelt. Die Kühlung kann bspw. durch eine Luftzufuhr in das Formwerkzeug erfolgen. Eingebrachte Prozess- oder Kühlluft durchströmt dabei bspw. Nebenluftkanäle zum Entlüften des Formwerkzeugs oder Ansaugkanäle des Formwerkzeugs zum Absaugen von während eines Heißpressprozess entstehendem Wasserdampf. Hierzu kann eine Kühleinrichtung bspw. einen Ventilator aufweisen, der je nach Betriebsart und Ansteuerung verschiedene Druckzustände und Geschwindigkeiten erreichen kann.

In weiteren Ausführungen kann nach Beendigung eines Formprozesses zur Überführung des Formwerkzeugs in den Grundzustand der zusätzliche Wärmeintrag in das Formwerkzeug unterbrochen und das Formwerkzeug solange gekühlt werden, bis sich das Formwerkzeug der Standby-Temperatur annähert. Hierbei muss das Formwerkzeug nicht solange gekühlt werden, bis es die Standby-Temperatur erreicht hat.

In weiteren Ausführungen kann der Produktionstemperaturbereich einen Temperaturbereich umfassen, in welchem das Formwerkzeug eine Stichmaßtemperatur aufweist, bei welcher eine Übergabe von zu verpressenden Vorformlingen erfolgt, welche eine Temperatur unterhalb der Standby-Temperatur aufweisen. Die Stichmaßtemperatur ist hierbei eine maßgebliche Temperatur für den gesamten Herstellungsprozess und den Formprozess. Solange das Formwerkzeug eine Stichmaßtemperatur aufweist, können bspw. über weitere Werkzeuge feuchte Vorformlinge übergeben werden, wobei sowohl die Vorformlinge als auch ein Übergabewerkzeug deutlich kühler sind wie das Formwerkzeug. Wesentlich ist dabei die Werkzeugausdehnung des Formwerkzeugs, welches innerhalb des Stichmaßtemperaturbereichs eine optimale Ausdehnung aufweist.

In weiteren Ausführungen kann die minimale Produktionstemperatur eine untere Stichmaßtemperatur und die maximale Produktionstemperatur eine obere Stichmaßtemperatur des Formwerkzeugs sein.

In weiteren Ausführungen können mindestens die Temperatur an der mindestens einen Kavität und die Temperatur an dem Werkzeuggrundkörper gemessen werden, um einen Wärmeübergang zu erfassen und die Regelung des Wärmeeintrags vorzunehmen.

In weiteren Ausführungen kann ein Wärmestrom vorab in einem Referenzbetrieb des Formwerkzeugs ermittelt werden, der vom herzustellenden Produkt bzw. Formteil abhängt und als Referenz für entsprechende Formprozesse verwendet wird.

In weiteren Ausführungen kann ausgehend vom Grundzustand des Formwerkzeug ein Formprozess sofort gestartet werden, wenn die Temperatur des Formwerkzeugs größer oder gleich wie die minimale Produktionstemperatur ist. Dabei wird ohne eine Anfahrzeit sofort der Formprozess gestartet und die im Formprozess gefertigten Formteile weisen im Vergleich zu nachfolgenden Formteilen aus Folgeprozessen hergestellten Formteile gleiche Eigenschaften auf.

Die vorstehend genannte Aufgabe wird auch durch eine Formstation mit mindestens einem Formwerkzeug, das einen Werkzeuggrundkörper und mindestens eine an dem Werkzeuggrundkörper angeordnete Kavität aufweist, zur Herstellung von Formteilen aus einem faserhaltigen Material gelöst, wobei Vorformlinge mit einem Feuchtigkeitsgehalt größer 30 Gew.-% unter Druck und Temperatureintrag zu Formteilen verpresst werden, ferner aufweisend mindestens eine im Werkzeuggrundkörper angeordnete Heizeinrichtung und mindestens eine Kühleinrichtung, wobei über die mindestens eine Heizeinrichtung und die mindestens eine Kühleinrichtung die Temperatur des Formwerkzeugs im Betrieb zwischen einer Standby-Temperatur und einer maximalen Produktionstemperatur eines Produktionstemperaturbereichs regelbar ist, wobei die Standby-Temperatur kleiner ist wie eine minimale Produktionstemperatur, ferner aufweisend mindestens ein erstes Sensorelement und mindestens ein zweites Sensorelement zum Erfassen der Temperatur des Werkzeuggrundkörpers und der mindestens einen Kavität, wobei das Formwerkzeug durch Wärmeeintrag auf einen Grundzustand bringbar ist und ein Formprozess aus dem Grundzustand, bei welchem das Formwerkzeug mindestens die Standby-Temperatur aufweist, in den Produktionstemperaturbereich durch einen zusätzlichen Wärmeeintrag bringbar ist, wobei der Produktionstemperaturbereich zwischen der minimalen Produktionstemperatur und der maximalen Produktionstemperatur liegt, wobei nach Erreichen der minimalen Produktionstemperatur im Formwerkzeug ein Formprozess startbar ist und die mindestens eine Heizeinrichtung dazu ausgebildet ist, den zusätzlichen Wärmeeintrag in das Formwerkzeug nur während des Formprozesses aufrechtzuerhalten. Vorteile:
- Stabiler Lauf ab Zyklus1
- Steigerung der Produktivität
- Verkürzung der Stillstands-Zeiten aufgrund Prozessfehler
- Erhöhung der Werkzeug Standzeiten und Sicherheiten gegen thermische Ermüdung
- Angleichung der Produktqualitäten zu Beginn und während des Prozesses

Die vorstehenden Ausführungen und Vorteile werden auch mit einer hierin beschriebenen Formstation (Heißpressstation) erreicht.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung einer Faserverarbeitungseinrichtung;
- Fig. 2: eine schematische Darstellung der qualitativen Auftragung der Effizienz des Wärmeübergangs in Kavitäten eines Formwerkzeugs;
- Fig. 3: eine schematische Darstellung eines Formwerkzeugs;
- Fig. 4: eine schematische Darstellung einer Temperaturregelung gemäß dem Stand der Technik;
- Fig. 5: eine schematische Darstellung einer weiteren Temperaturregelung gemäß dem Stand der Technik; und
- Fig. 6: schematische Darstellung einer Temperaturregelung gemäß der hierin beschriebenen technischen Lehre.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

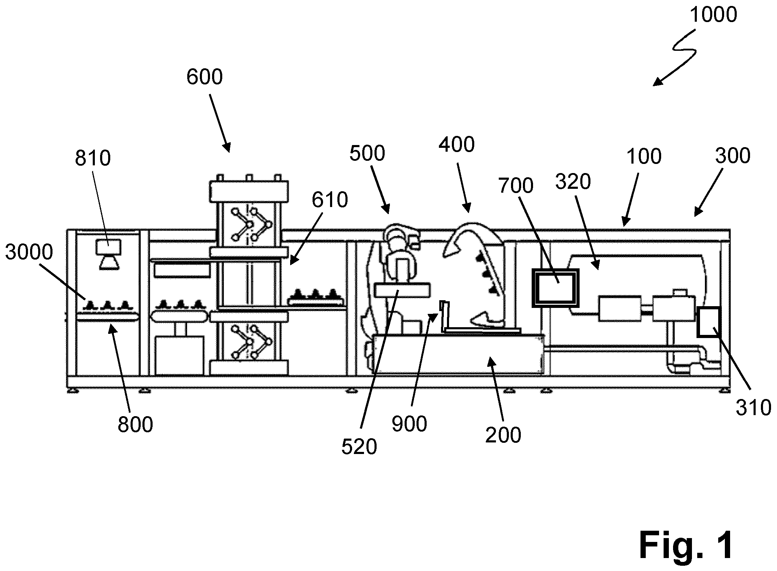

Fig. 1 zeigt eine schematische Darstellung einer Faserverarbeitungseinrichtung 1000 zur Herstellung von dreidimensionalen Formteilen aus einem faserhaltigen Material. Das faserhaltige Material für die Herstellung von Formteilen wird im gezeigten Ausführungsbeispiel in einem Pulpebecken 200 der Faserverarbeitungseinrichtung 1000 aufbereitet. Hierzu können über eine Flüssigkeitszufuhr bspw. Wasser und Faserstoffe sowie ggf. Zusätze in ein Pulpebecken 200 eingebracht und die Pulpe in dem Pulpebecken 200 durch Vermischen der einzelnen Komponenten unter Wärmeeintrag und von Hilfsmitteln, wie bspw. eines Rührers, aufbereitet werden.

Als Pulpe wird eine wässrige Lösung bezeichnet, die Fasern aufweist, wobei der Fasergehalt an der wässrigen Lösung in einem Bereich von 0,1 bis 10 Gew.-% vorliegen kann. Zusätzlich können Zusätze, wie bspw. Stärke, chemische Zusätze, Wachs, etc. enthalten sein. Bei den Fasern kann es sich bspw. um natürliche Fasern, wie Cellulosefasern, oder Fasern aus einem faserhaltigen Ursprungsmaterial (z.B. Altpapier) handeln. Eine Faseraufbereitungsanlage bietet die Möglichkeit, Pulpe in großer Menge aufzubereiten und mehreren Faserverarbeitungseinrichtungen 1000 zur Verfügung zu stellen.

Über die Faserverarbeitungseinrichtung 1000 lassen sich bspw. biologisch abbaubare Becher 3000, Kapseln, Schalen, Teller und weitere Form- und/oder Verpackungsteile (bspw. als Halter-/Stützstrukturen für elektronische Geräte) herstellen. Da als Ausgangsmaterial für die Produkte eine faserhaltige Pulpe mit natürlichen Fasern verwendet wird, können die so hergestellten Produkte nach ihrer Verwendung selbst wieder als Ausgangsmaterial für die Herstellung von derartigen Produkten dienen oder kompostiert werden, weil diese in der Regel vollständig zersetzt werden können und keine bedenklichen, umweltgefährdenden Stoffe enthalten.

Die in Fig. 1 gezeigte Faserverarbeitungseinrichtung 1000 weist einen Rahmen 100 auf, der von einer Verkleidung umgeben sein kann. Die Versorgungseinheiten 300 der Faserverarbeitungseinrichtung 1000 umfassen bspw. Schnittstellen für die Zufuhr von Medien (bspw. Wasser, Pulpe, Druckluft, Gas, etc.) und Energie (Stromversorgung), eine zentrale Steuereinheit 310, mindestens eine Ansaugeinrichtung 320, Leitungssysteme für die verschiedenen Medien, Pumpen, Ventile, Leitungen, Sensoren, Messeinrichtungen, ein BUS-System, etc. sowie Schnittstellen für eine bidirektionale Kommunikation über eine drahtgebundene und/oder drahtlose Datenverbindung. Anstelle einer drahtgebundenen Datenverbindung kann auch eine Datenverbindung über eine Glasfaserleitung bestehen. Die Datenverbindung kann bspw. zwischen der Steuereinheit 310 und einer zentralen Steuerung für mehrere Faserverarbeitungseinrichtungen 1000, zu einer Faseraufbereitungsanlage, zu einer Service-Stelle und/oder weiteren Einrichtungen bestehen. Es kann über eine bidirektionale Datenverbindung auch eine Steuerung der Faserverarbeitungseinrichtung 1000 über eine mobile Einrichtung, wie bspw. ein Smartphone, Tablet-Computer oder dergleichen erfolgen.

Die Steuereinheit 310 steht über ein BUS-System oder eine Datenverbindung mit einem HMI-Panel 700 in bidirektionaler Kommunikation. Das HMI (Human-Machine-Interface)-Panel 700 weist ein Display auf, welches Betriebsdaten und Zustände der Faserverarbeitungseinrichtung 1000 für auswählbare Bestandteile oder die gesamte Faserverarbeitungseinrichtung 1000 anzeigt. Das Display kann als Touch-Display ausgebildet sein, so dass hierüber Einstellungen per Hand von einem Operator der Faserverarbeitungseinrichtung 1000 vorgenommen werden können. Zusätzlich oder alternativ können an dem HMI-Panel 700 weitere Eingabemittel, wie bspw. eine Tastatur, ein Joystick, ein Tastenfeld etc. für Operatoreingaben vorgesehen sein. Hierüber können Einstellungen verändert und Einfluss auf den Betrieb der Faserverarbeitungseinrichtung 1000 vorgenommen werden.

Die Faserverarbeitungseinrichtung 1000 weist einen Roboter 500 auf. Der Roboter 500 ist als sogenannter 6-Achs Roboter ausgebildet und damit in der Lage innerhalb seines Aktionsradius Teile aufzunehmen, zu rotieren und in sämtliche Raumrichtungen zu bewegen. Anstelle des in den Figuren gezeigten Roboters 500 können auch andere Handling-Einrichtungen vorgesehen sein, die dazu ausgebildet sind, Produkte aufzunehmen und zu verdrehen beziehungsweise zu rotieren und in die verschiedenen Raumrichtungen zu bewegen. Darüber hinaus kann eine derartige Handling-Einrichtung auch anderweitig ausgebildet sein, wobei hierzu die Anordnung der entsprechenden Stationen der Faserverarbeitungseinrichtung 1000 von dem gezeigten Ausführungsbeispiel abweichen kann.

An dem Roboter 500 ist ein Saugwerkzeug 520 angeordnet. Das Saugwerkzeug 520 weist in dem gezeigten Ausführungsbeispiel als Negativ der zu formenden dreidimensionalen Formteile, wie bspw. von Bechern 3000, ausgebildete Kavitäten als Ansaugkavitäten auf. Die Kavitäten können bspw. eine netzartige Oberfläche aufweisen, an der sich Fasern aus der Pulpe während des Ansaugens anlagern. Hinter den netzartigen Oberflächen stehen die Kavitäten über Kanäle im Saugwerkzeug 520 mit einer Saugeinrichtung in Verbindung. Die Saugeinrichtung kann bspw. durch eine Ansaugeinrichtung 320 realisiert werden. Über die Saugeinrichtung kann Pulpe angesaugt werden, wenn sich das Saugwerkzeug 520 so innerhalb des Pulpebeckens 200 befindet, dass sich die Kavitäten 522 zumindest partiell in der wässrigen Faserlösung, der Pulpe, befinden. Ein Vakuum bzw. ein Unterdruck zum Ansaugen von Fasern, wenn sich das Saugwerkzeug 520 in dem Pulpebecken 200 und der Pulpe befindet, können über die Ansaugeinrichtung 320 bereitgestellt werden. Hierzu weist die Faserverarbeitungseinrichtung 1000 entsprechende Mittel bei den Versorgungseinheiten 300 auf. Das Saugwerkzeug 520 weist Leitungen zur Bereitstellung des Vakuums/Unterdrucks von der Ansaugeinrichtung 320 bei den Versorgungseinheiten 300 zu dem Saugwerkzeug 520 und den Öffnungen in den Kavitäten 522 auf. In den Leitungen sind Ventile angeordnet, die über die Steuereinheit 310 angesteuert werden können und damit das Ansaugen der Fasern regeln. Es kann durch die Ansaugeinrichtung 320 anstelle eines Ansaugens auch ein "Ausblasen" erfolgen, wozu die Ansaugeinrichtung 320 entsprechend ihrer Ausgestaltung in einen anderen Betriebsmodus geschaltet wird.

Bei der Herstellung von Formteilen aus einem Fasermaterial wird das Saugwerkzeug 520 in die Pulpe getaucht und ein Unterdruck/Vakuum an den Öffnungen der Kavitäten 522 angelegt, so dass Fasern aus der Pulpe angesaugt werden und sich bspw. an dem Netz der Kavitäten 522 des Saugwerkzeugs 520 anlagern.

Danach hebt der Roboter 500 das Saugwerkzeug 520 aus dem Pulpebecken 200 und bewegt es mit den an den Kavitäten 522 anhaftenden Fasern, die noch einen relativ hohen Feuchtigkeitsgehalt von bspw. über 80 Gew.-% an Wasser aufweisen, an die Vorpressstation 400 der Faserverarbeitungseinrichtung 1000, wobei zur Übergabe der Unterdruck in den Kavitäten 522 aufrechterhalten wird. Die Vorpressstation 400 weist ein Vorpresswerkzeug mit Vorpressformen auf. Die Vorpressformen können bspw. als Positiv der zu fertigenden Formteile ausgebildet sein und zur Aufnahme der in den Kavitäten 522 anhaftenden Fasern eine entsprechende Größe im Hinblick auf die Gestalt der Formteile aufweisen.

Bei der Herstellung von Formteilen wird das Saugwerkzeug 520 mit den in den Kavitäten anhaftenden Fasern so zu der Vorpressstation 400 bewegt, dass die Fasern in die Kavitäten 522 gedrückt werden. Dabei werden die Fasern in den Kavitäten miteinander verpresst, so dass hierüber eine stärkere Verbindung zwischen den Fasern erzeugt wird. Zudem wird dabei der Feuchtigkeitsgehalt der aus den angesaugten Fasern gebildeten Vorformlinge reduziert, so dass die nach dem Vorpressen gebildeten Vorformlinge nur noch einen Feuchtigkeitsgehalt von bspw. 60 Gew.-% aufweisen. Zum Auspressen von Wasser können flexible Vorpressformen zum Einsatz kommen, die bspw. mittels Druckluft (Prozessluft) aufgebläht werden und dabei die Fasern gegen die Wand einer Kavität eines weiteren Saugwerkzeugteils drücken. Durch das "Aufblasen" wird sowohl Wasser ausgepresst als auch die Dicke der angesaugten Faserschicht reduziert.

Während des Vorpressens kann Flüssigkeit bzw. Pulpe über das Saugwerkzeug 520 und/oder über weitere Öffnungen in Vorpressformen bzw. -werkzeugteilen (Kavitäten) abgesaugt und zurückgeführt werden. Die beim Ansaugen über das Saugwerkzeug 520 und/oder beim Vorpressen in der Vorpressstation 400 austretende Flüssigkeit bzw. Pulpe kann in das Pulpebecken 200 zurückgeführt werden.

Nach dem Vorpressen in der Vorpressstation 400 werden die so erzeugten Vorformlinge an dem Saugwerkzeug 520 über den Roboter 500 zu einer Heißpressstation 600 bewegt, die auch als Formwerkzeug für die finale Formgebung und Trocknung der Vorformlinge zu Produkten bzw. Formteilen bezeichnet wird. Hierzu wird der Unterdruck am Saugwerkzeug 520 aufrechterhalten, damit die Vorformlinge in den Kavitäten 522 verbleiben. Die Vorformlinge werden über das Saugwerkzeug 520 auf einen unteren Werkzeuggrundkörper übergeben, welcher entlang der Fertigungslinie aus der Heißpresseinrichtung 610 verfahrbar ist. Befindet sich der untere Werkzeuggrundkörper in seiner ausgefahrenen Position, wird das Saugwerkzeug 520 so zu dem unteren Werkzeuggrundkörper bewegt, dass die Vorformlinge auf Formeinrichtungen des unteren Werkzeuggrundkörpers aufgesetzt werden können. Anschließend wird über die Öffnungen im Saugwerkzeug 520 ein Überdruck erzeugt, so dass die Vorformlinge aktiv von den Kavitäten im Saugwerkzeug abgelegt werden, oder das Ansaugen wird beendet, sodass die Vorformlinge schwerkraftbedingt auf den Formeinrichtungen bzw. Kavitäten des unteren Werkzeuggrundkörpers verbleiben. Durch eine Bereitstellung von Überdruck an den Öffnungen der Kavitäten des Saugwerkzeugs können vorgepresste Vorformlinge, die in den Kavitäten des Saugwerkzeugs anliegen/anhaften, gelöst und abgegeben werden.

Danach wird das Saugwerkzeug 520 über den Roboter 500 wegbewegt und das Saugwerkzeug 520 wird in das Pulpebecken 200 getaucht, um weitere Fasern zur Herstellung von Formteilen aus faserhaltigem Material anzusaugen.

Der untere Werkzeuggrundkörper verfährt nach der Übergabe der Vorformlinge in die Heißpressstation 600. In der Heißpressstation 600 erfolgt unter Wärmeeintrag und hohem Druck ein Verpressen der Vorformlinge zu fertigen Formteilen, wozu ein oberer Werkzeuggrundkörper über eine Presse auf den unteren Werkzeuggrundkörper gebracht wird. Der obere Werkzeuggrundkörper weist zu den Kavitäten bzw. Formeinrichtungen korrespondierende Kavitäten auf. Nach dem Heißpressvorgang werden der untere Werkzeuggrundkörpers und der obere Werkzeuggrundkörper relativ voneinander wegbewegt und der obere Werkzeuggrundkörper entlang der Faserverarbeitungseinrichtung 1000 in Fertigungsrichtung bewegt, wobei nach dem Heißpressen die gefertigten Formteile über den oberen Werkzeuggrundkörper angesaugt werden und damit innerhalb der Kavitäten verbleiben. Somit werden die gefertigten Formteile aus der Heißpressstation 600 verbracht und über den oberen Werkzeuggrundkörper nach dem Verfahren auf einem Transportband einer Fördereinrichtung 800 abgelegt. Nach dem Ablegen wird das Ansaugen über den oberen Werkzeuggrundkörper beendet und die Formteile verbleiben auf dem Transportband. Der obere Werkzeuggrundkörper fährt zurück in die Heißpressstation 600 und ein weiterer Heißpressvorgang kann durchgeführt werden.

Die Faserverarbeitungseinrichtung 1000 weist weiterhin eine Fördereinrichtung 800 mit einem Transportband auf. Auf das Transportband können die gefertigten Formteile aus faserhaltigen Material nach dem finalen Formen und dem Heißpressen in der Heißpressstation 600 abgelegt und aus der Faserverarbeitungseinrichtung 1000 ausgebracht werden. In weiteren Ausführungen kann nach dem Ablegen der Formteile auf das Transportband der Fördereinrichtung 800 eine weitere Bearbeitung erfolgen, wie bspw. ein Befüllen und/oder ein Stapeln der Produkte. Das Stapeln kann bspw. über einen zusätzlichen Roboter oder eine andere Einrichtung erfolgen.

Die Faserverarbeitungseinrichtung 1000 aus Fig. 1 zeigt eine mögliche Ausführungsform. Es kann eine Faserverarbeitungseinrichtung gemäß der hierin beschriebenen technischen Lehre auch nur eine Formstation mit einem auswechselbaren Werkzeug, bspw. ein Saugwerkzeug 520 oder ein Heißpresswerkzeug, in dem faserhaltiges Material verarbeitbar ist, wobei verschiedene Werkzeuge zur Herstellung unterschiedlicher dreidimensionaler Formteile in der mindestens einen Formstation aufnehmbar sind, aufweisen. Die weiteren für die Faserverarbeitungseinrichtung 1000 von Fig. 1 gezeigten Stationen und Vorrichtungen sind zur Umsetzung der technischen Lehre nicht zwingend erforderlich.

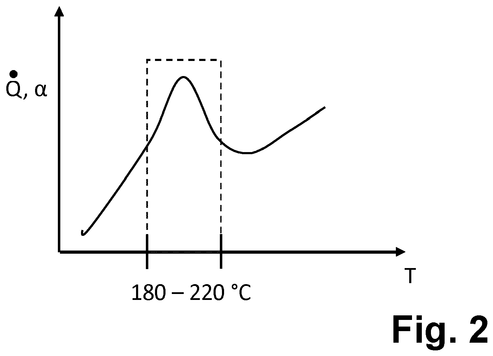

Fig. 2 zeigt eine schematische Darstellung der qualitativen Auftragung der Effizienz des Wärmeübergangs in Kavitäten eines Formwerkzeugs, wobei zwischen 180 und 220 °C der optimale Temperaturbereich zum Verpressen bzw. Heißpressen von faserhaltigen Vorformlingen liegt. Daher ist es entscheidend, dass während eines Formprozesses (Heißpressprozess), die Oberflächentemperatur der Kavitäten des Formwerkzeugs nicht über die maximale Temperatur (hier 220 °C) erwärmt wird, weil es dann zu einer Beschädigung der Vorformlinge, zu einer ungleichmäßigen Formung über die Kavitäten eines Multikavitäten-Formwerkzeugs und zu einem starken Temperatureinbruch im Formwerkzeug kommt.

Fig. 3 zeigt eine schematische Darstellung eines Werkzeuggrundkörpers eines Formwerkzeugs mit daran angeordneten Kavitäten. Die Beheizung des Werkzeuggrundkörpers kann bspw. über Heizpatronen erfolgen, die elektrisch ansteuerbar sind. In weiteren Ausführungen können auch andere Heizeinrichtungen (bspw. Induktive, fluidische oder pneumatische Beheizung) erfolgen.

Fig. 4 zeigt eine schematische Darstellung einer Temperaturregelung gemäß dem Stand der Technik, wobei die Oberflächentemperatur der Kavitäten zunächst sehr hoch bis auf 250 °C gebracht wird, um einem Abkühlen durch Aufsetzen von feuchten Vorformlingen entgegenzutreten. Jedoch kommt es dabei zu den eingangs beschriebenen Nachteilen und Problemen. Gleiches gilt für die in Fig. 5 gezeigte schematische Darstellung einer weiteren Temperaturregelung gemäß dem Stand der Technik, wobei ein kurzer Stopp massive Auswirkung auf den Temperaturverlauf und insbesondere die Oberflächentemperatur von Kavitäten hat.

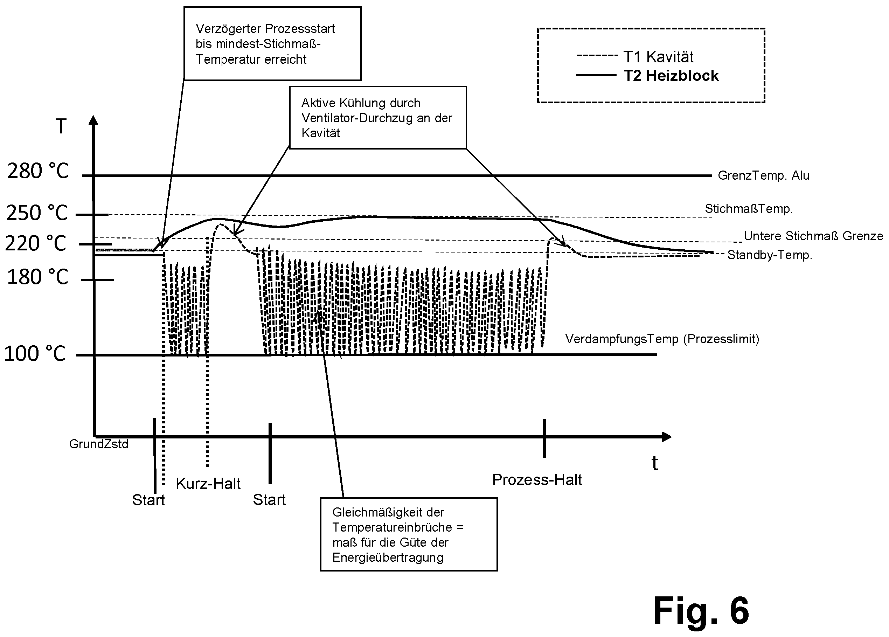

Fig. 6 zeigt eine schematische Darstellung einer Temperaturregelung gemäß der hierin beschriebenen technischen Lehre, wobei die Probleme und Nachteile des Stands der Technik behoben werden.

Hierbei wird der Energiefluss an sich, also der Wärmestrom bspw. durch Messen der Temperaturen T1 und T2 überwacht und geregelt. Dafür sind bspw. mindestens zwei Temperatursensoren an repräsentativen Stellen der Quelle (Werkzeuggrundkörper) und Senke (Kavität) notwendig.

Ferner kann die Information über den sich einstellenden Wärmestrom (Produktabhängig) zusätzlich oder alternativ verwendet werden. Der produktabhängige Wärmestrom kann durch Aufzeichnung über eine Referenzfahrt ermittelt werden. Bei dieser Art von Regelung kann eine Sensorik für jedes Werkzeug passend ausgelegt und platziert werden.

Grundsätzlich hat jede Art von Pulp-Material in Verwendung einer Faserformeinrichtung 1000 (Wet-Fiber-Anlage) eine gemeinsame maximale effektive Verdampfungstemperatur (siehe Fig. 2), die nicht überschritten werden sollte. Oberhalb dieses Temperaturbereichs sperrt das auftretende Dampfpolster den effektiven Wärmeübergang ähnlich einer tanzenden Wasserperle auf einer zu heißen Herdplatte (Leidenfrost-Effekt).

Ferner existiert ein Mindest-Temperaturbereich, der für effektive Verdampfung an der Kontaktfläche von Werkzeug und Material nicht unterschritten werden sollte. Daher wäre es nicht dienlich, mit zu hohen Temperaturen wie im Stand der Technik einen Formprozess zu starten, da sich bis zum Einpendeln der effektiven Temperaturen der Prozess zyklisch ändert. Zudem ist es, wie eingangs ausgeführt, im Hinblick auf das verwendete Material/Werkstoff des Formwerkzeug negativ, wenn die Kavitäten unnötig in zu heißen Grundzuständen verweilen, vor allem dann, wenn die Faserformeinrichtung 1000 bzw. die Formstation (Heißpressstation 600) mit dem Formwerkzeug (bekanntlich) mehrere Stunden nicht in Betrieb geht.

Die hierin beschriebene Methodik berücksichtig die vorstehend genannten Aspekte vollständig und verhindert ein Überhitzen der Oberflächentemperaturen der Kavitäten dauerhaft. Zudem kann mit Anwendung dieser Methodik der zyklische Prozess ohne große Temperaturschwankungen aus einem kühleren Zustand heraus starten und die Oberflächentemperaturen der Kavität befinden sich ab dem ersten Zyklus in einem Bereich, den sie im Stand der Technik erst nach etlichen Zyklen (ohnehin) erreichen werden. Die Qualität der ersten Produkte unterscheidet sich also nicht mehr von den Produkten nach einiger Zeit. Die vorstehend beschriebene Steuerung ermöglicht einen "Kaltstart" des Heißpressprozesses.

Der Prozessstart erfolgt mit der beschriebenen Methodik aus einer kühleren Standby-Temperatur heraus. Im Unterschied zur bisherigen Temperaturregelung gemäß dem Stand der Technik überhitzen die Kavitäten nicht mehr und die Dauerhaltbarkeit wird wesentlich erhöht. Schäden an den Kavitäten durch zu hohe Temperaturen treten daher nicht mehr auf.

Zudem kann eine Kühleinrichtung, wie bspw. ein drehzahlgeregelter Ventilator, welche eine Luftzufuhr in das Formwerkzeug bereitstellt, im unvorhergesehenen Prozess-Halt als aktiver Kühler verwendet werden, um auch ohne Produkt, den noch auf dem Weg befindlichen Wärmeschub als Kühlleistung von der Kavität abzunehmen und die Temperaturen wieder auf mindestens Grundzustand/Standby-Zustand zu senken.

Im Prozessstart des Formprozesses wird der ausgeglichene "kalte" Standby-Zustand (< 230°C) durch Leistungseintrag (Wärme) wie gewohnt angehoben, sodass sich ein Wärmestrom ausbildet, der in Näherung dem Wärmestrom entspricht, den der Formprozess später ohnehin fordert. Dabei steigt die Temperatur des Werkzeuggrundkörpers auf dessen Stichmaßtemperatur und -Ausdehnung (sodass kaltes Saugwerkzeug auf Heißpresswerkzeug trifft). Diese Zeit muss abgewartet werden, um den Zyklus zu starten (max. 1-2 min). Ist die Formstation jedoch einmal "geweckt" bzw. befindet sich nach Prozesshalt noch in einer verträglichen Temperaturspanne um die Stichmaßtemperatur (z. B. +-15°C) kann ohne Wartezeit wieder gestartet werden.

Hierzu ist es erforderlich, eine Standby-Temperatur und eine Produktionstemperatur bzw. einen Produktionstemperaturbereich vorzugeben. Die effektiven Temperaturen der Bauteile des Formwerkzeugs bewegen sich im eingeschalteten Zustand der Formstation nur zwischen den beiden Temperaturen, d.h. weder darüber noch darunter. Im Prozesshalt wird automatisch eine Kühleinrichtung (z.B. Ventilator) zugeschaltet, wodurch solange Kühlluft (Umgebungsluft) durch die Dampfbohrungen der Kavität gezogen wird, bis eine Temperatur nahe der Standby-Temperatur erreicht wird (effektive Kavitäten-Kühlung). Dabei wird die Stichmaßtemperatur überwacht, sodass der Formprozess jederzeit wieder gestartet werden kann, wenn sich die aktuelle Werkzeuggrundkörpertemperatur (Block-Temperatur) noch in einem Bereich um die Stichmaßtemperatur befindet, wobei eine Überhitzung dennoch ausgeschlossen ist.

Somit wird eine Lösung bereitgestellt, die eine Überhitzung der Kavitäten bei gleichmäßigem Prozesslauf ab Zyklus 1 vermeidet. Daraus ergibt sich eine stabile Produktqualität und effiziente Energieausbeute. Weiterhin wird eine deutliche Verlängerung der Intervalle erreicht, in denen die Kavitäten aufgrund temperaturbedingter Beschädigung gewechselt werden müssen (Standzeit). Ebenso wird eine Erhöhung der Standzeit des Aluminiums erreicht und es treten keine temperaturbedingten Beschädigungen am Produkt (Verbrennungen/Dampf-Zerreißen) ab Zyklus 1 auf.

### Bezugszeichenliste

- 100: Rahmen
- 200: Pulpebecken
- 300: Versorgungseinheiten
- 310: Steuereinheit
- 320: Ansaugeinrichtung
- 400: Vorpressstation
- 500: Roboter
- 520: Saugwerkzeug
- 600: Heißpressstation
- 610: Heißpresseinrichtung
- 700: HMI-Panel
- 800: Fördereinrichtung
- 810: Kamera
- 900: Wärmetauscher
- 1000: Faserverarbeitungseinrichtung
- 3000: Becher

## Patentansprüche

1. Verfahren zur Temperaturregelung in einem Formwerkzeug, das einen Werkzeuggrundkörper und mindestens eine Kavität aufweist, zur Herstellung von Formteilen aus einem faserhaltigen Material, wobei Vorformlinge mit einem Feuchtigkeitsgehalt größer 30 Gew.-% unter Druck und Temperatureintrag zu Formteilen verpresst werden, wobei die Temperatur des Formwerkzeugs im Betrieb zwischen einer Standby-Temperatur und einer maximalen Produktionstemperatur eines Produktionstemperaturbereichs geregelt wird, wobei die Standby-Temperatur kleiner ist wie eine minimale Produktionstemperatur, wobei das Formwerkzeug durch Wärmeeintrag auf einen Grundzustand gehalten wird, wobei ein Formprozess aus dem Grundzustand, bei welchem das Formwerkzeug mindestens die Standby-Temperatur aufweist, in den Produktionstemperaturbereich durch einen zusätzlichen Wärmeeintrag gebracht wird, wobei der Produktionstemperaturbereich zwischen der minimalen Produktionstemperatur und der maximalen Produktionstemperatur liegt, wobei nach Erreichen der minimalen Produktionstemperatur im Formwerkzeug ein Formprozess gestartet und der zusätzliche Wärmeeintrag in das Formwerkzeug nur während des Formprozesses aufrechterhalten wird.

2. Verfahren nach Anspruch 1, wobei der Wärmeintrag zur Erreichung des Grundzustands und der zusätzliche Wärmeeintrag zum Erreichen einer Produktionstemperatur innerhalb des Produktionstemperaturbereichs durch Beheizen des Werkzeuggrundkörpers erfolgt.

3. Verfahren nach Anspruch 1 oder 2, wobei während einer Unterbrechung des Formprozesses der zusätzliche Wärmeeintrag in das Formwerkzeug unterbrochen und das Formwerkzeug für die Dauer der Unterbrechung gekühlt wird.

4. Verfahren nach einem der Ansprüche 1 bis 3, wobei nach Beendigung eines Formprozesses zur Überführung des Formwerkzeugs in den Grundzustand der zusätzliche Wärmeintrag in das Formwerkzeug unterbrochen und das Formwerkzeug solange gekühlt wird, bis sich das Formwerkzeug der Standby-Temperatur annähert.

5. Verfahren nach einem der Ansprüche 1 bis 4, wobei der Produktionstemperaturbereich einen Temperaturbereich umfasst, in welchem das Formwerkzeug eine Stichmaßtemperatur aufweist, bei welcher eine Übergabe von zu verpressenden Vorformlingen erfolgt, welche eine Temperatur unterhalb der Standby-Temperatur aufweisen.

6. Verfahren nach einem der Ansprüche 1 bis 5, wobei die minimale Produktionstemperatur eine untere Stichmaßtemperatur und die maximale Produktionstemperatur eine obere Stichmaßtemperatur des Formwerkzeugs ist.

7. Verfahren nach einem der Ansprüche 1 bis 6, wobei mindestens die Temperatur an der mindestens einen Kavität und die Temperatur an dem Werkzeuggrundkörper gemessen werden.

8. Verfahren nach einem der Ansprüche 1 bis 7, wobei ein Wärmestrom vorab in einem Referenzbetrieb des Formwerkzeugs ermittelt wird.

9. Verfahren nach einem der Ansprüche 1 bis 8, wobei ausgehend vom Grundzustand des Formwerkzeug ein Formprozess sofort gestartet werden kann, wenn die Temperatur des Formwerkzeugs größer oder gleich wie die minimale Produktionstemperatur ist.

10. Formstation mit mindestens einem Formwerkzeug, das einen Werkzeuggrundkörper und mindestens eine an dem Werkzeuggrundkörper angeordnete Kavität aufweist, zur Herstellung von Formteilen aus einem faserhaltigen Material, wobei Vorformlinge mit einem Feuchtigkeitsgehalt größer 30 Gew.-% unter Druck und Temperatureintrag zu Formteilen verpresst werden, ferner aufweisend mindestens eine im Werkzeuggrundkörper angeordnete Heizeinrichtung und mindestens eine Kühleinrichtung, wobei über die mindestens eine Heizeinrichtung und die mindestens eine Kühleinrichtung die Temperatur des Formwerkzeugs im Betrieb zwischen einer Standby-Temperatur und einer maximalen Produktionstemperatur eines Produktionstemperaturbereichs regelbar ist, wobei die Standby-Temperatur kleiner ist wie eine minimale Produktionstemperatur, ferner aufweisend mindestens ein erstes Sensorelement und mindestens ein zweites Sensorelement zum Erfassen der Temperatur des Werkzeuggrundkörpers und der mindestens einen Kavität, wobei das Formwerkzeug durch Wärmeeintrag auf einen Grundzustand bringbar ist und ein Formprozess aus dem Grundzustand, bei welchem das Formwerkzeug mindestens die Standby-Temperatur aufweist, in den Produktionstemperaturbereich durch einen zusätzlichen Wärmeeintrag bringbar ist, wobei der Produktionstemperaturbereich zwischen der minimalen Produktionstemperatur und der maximalen Produktionstemperatur liegt, wobei nach Erreichen der minimalen Produktionstemperatur im Formwerkzeug ein Formprozess startbar ist und die mindestens eine Heizeinrichtung dazu ausgebildet ist, den zusätzlichen Wärmeeintrag in das Formwerkzeug nur während des Formprozesses aufrechtzuerhalten.

## Claims

1. Method for controlling the temperature in a moulding tool which has a tool base body and at least one cavity, for producing moulded parts from a fibre-containing material, wherein preforms having a moisture content of greater than 30% by weight are pressed into moulded parts under pressure and temperature input, wherein the temperature of the moulding tool is controlled during operation between a standby temperature and a maximum production temperature of a production temperature range, wherein the standby temperature is lower than a minimum production temperature, wherein the moulding tool is maintained in a basic state by heat input, wherein a moulding process is brought from the basic state, in which the moulding tool has at least the standby temperature, into the production temperature range by an additional heat input, wherein the production temperature range lies between the minimum production temperature and the maximum production temperature, wherein, after the minimum production temperature has been reached in the moulding tool, a moulding process is started and the additional heat input into the moulding tool is maintained only during the moulding process.

2. Method according to claim 1, wherein the heat input for reaching the basic state and the additional heat input for reaching a production temperature within the production temperature range are effected by heating the tool base body.

3. Method according to claim 1 or 2, wherein, during an interruption of the moulding process, the additional heat input into the moulding tool is interrupted and the moulding tool is cooled for the duration of the interruption.

4. Method according to any one of claims 1 to 3, wherein, after termination of a moulding process, in order to convert the moulding tool into the basic state, the additional heat input into the moulding tool is interrupted and the moulding tool is cooled until the moulding tool approaches the standby temperature.

5. Method according to any one of claims 1 to 4, wherein the production temperature range comprises a temperature range in which the moulding tool has a gauge dimension temperature at which a transfer of preforms to be pressed takes place, which preforms have a temperature below the standby temperature.

6. Method according to any one of claims 1 to 5, wherein the minimum production temperature is a lower gauge dimension temperature and the maximum production temperature is an upper gauge dimension temperature of the moulding tool.

7. Method according to any one of claims 1 to 6, wherein at least the temperature at the at least one cavity and the temperature at the tool base body are measured.

8. Method according to any one of claims 1 to 7, wherein a heat flow is determined in advance in a reference operation of the moulding tool.

9. Method according to any one of claims 1 to 8, wherein, starting from the basic state of the moulding tool, a moulding process can be started immediately if the temperature of the moulding tool is greater than or equal to the minimum production temperature.

10. Moulding station with at least one moulding tool which has a tool base body and at least one cavity arranged on the tool base body, for producing moulded parts from a fibre-containing material, wherein preforms having a moisture content of greater than 30% by weight are pressed into moulded parts under pressure and temperature input, further having at least one heating device arranged in the tool base body and at least one cooling device, wherein the temperature of the moulding tool can be controlled during operation between a standby temperature and a maximum production temperature of a production temperature range via the at least one heating device and the at least one cooling device, wherein the standby temperature is lower than a minimum production temperature, further having at least one first sensor element and at least one second sensor element for detecting the temperature of the tool base body and of the at least one cavity, wherein the moulding tool can be brought into a basic state by heat input and a moulding process can be brought from the basic state, in which the moulding tool has at least the standby temperature, into the production temperature range by an additional heat input, wherein the production temperature range lies between the minimum production temperature and the maximum production temperature, wherein, after the minimum production temperature has been reached in the moulding tool, a moulding process can be started and the at least one heating device is designed to maintain the additional heat input into the moulding tool only during the moulding process.

## Revendications

1. Procédé de régulation de température dans un outil de moulage qui présente un corps de base d'outil et au moins une cavité, pour la fabrication de pièces moulées en un matériau contenant des fibres, procédé dans lequel des préformes ayant une teneur en humidité supérieure à 30 % en poids sont pressées sous pression et avec apport de température pour former des pièces moulées, dans lequel la température de l'outil de moulage est régulée en fonctionnement entre une température de veille et une température de production maximale d'une plage de températures de production, dans lequel la température de veille est inférieure à une température de production minimale, dans lequel l'outil de moulage est maintenu dans un état de base par apport de chaleur, dans lequel un processus de moulage est amené depuis l'état de base, état dans lequel l'outil de moulage présente au moins la température de veille, jusque dans la plage de températures de production par un apport de chaleur supplémentaire, dans lequel la plage de températures de production se situe entre la température de production minimale et la température de production maximale, dans lequel, une fois atteinte la température de production minimale dans l'outil de moulage, un processus de moulage est démarré et l'apport de chaleur supplémentaire dans l'outil de moulage est maintenu uniquement pendant le processus de moulage.

2. Procédé selon la revendication 1, dans lequel l'apport de chaleur pour atteindre l'état de base et l'apport de chaleur supplémentaire pour atteindre une température de production à l'intérieur de la plage de températures de production s'effectuent par chauffage du corps de base d'outil.

3. Procédé selon la revendication 1 ou 2, dans lequel, pendant une interruption du processus de moulage, l'apport de chaleur supplémentaire dans l'outil de moulage est interrompu et l'outil de moulage est refroidi pendant la durée de l'interruption.

4. Procédé selon l'une quelconque des revendications 1 à 3, dans lequel, après la fin d'un processus de moulage, en vue du passage de l'outil de moulage à l'état de base, l'apport de chaleur supplémentaire dans l'outil de moulage est interrompu et l'outil de moulage est refroidi jusqu'à ce que l'outil de moulage se rapproche de la température de veille.

5. Procédé selon l'une quelconque des revendications 1 à 4, dans lequel la plage de températures de production comprend une plage de températures dans laquelle l'outil de moulage présente une température de cote à laquelle s'effectue un transfert de préformes à presser qui présentent une température inférieure à la température de veille.

6. Procédé selon l'une quelconque des revendications 1 à 5, dans lequel la température de production minimale est une température de cote inférieure et la température de production maximale est une température de cote supérieure de l'outil de moulage.

7. Procédé selon l'une quelconque des revendications 1 à 6, dans lequel au moins la température au niveau de l'au moins une cavité et la température au niveau du corps de base d'outil sont mesurées.

8. Procédé selon l'une quelconque des revendications 1 à 7, dans lequel un flux thermique est déterminé au préalable lors d'un fonctionnement de référence de l'outil de moulage.

9. Procédé selon l'une quelconque des revendications 1 à 8, dans lequel, à partir de l'état de base de l'outil de moulage, un processus de moulage peut être démarré immédiatement lorsque la température de l'outil de moulage est supérieure ou égale à la température de production minimale.

10. Station de moulage comportant au moins un outil de moulage qui présente un corps de base d'outil et au moins une cavité disposée au niveau du corps de base d'outil, pour la fabrication de pièces moulées en un matériau contenant des fibres, station de moulage dans laquelle des préformes ayant une teneur en humidité supérieure à 30 % en poids sont pressées sous pression et avec apport de température pour former des pièces moulées, la station de moulage présentant en outre au moins un dispositif de chauffage disposé dans le corps de base d'outil et au moins un dispositif de refroidissement, dans laquelle, par l'intermédiaire de l'au moins un dispositif de chauffage et de l'au moins un dispositif de refroidissement, la température de l'outil de moulage peut être régulée en fonctionnement entre une température de veille et une température de production maximale d'une plage de températures de production, dans laquelle la température de veille est inférieure à une température de production minimale, la station de moulage présentant en outre au moins un premier élément capteur et au moins un deuxième élément capteur pour détecter la température du corps de base d'outil et de l'au moins une cavité, dans laquelle l'outil de moulage peut être amené à un état de base par apport de chaleur et un processus de moulage peut être amené depuis l'état de base, état dans lequel l'outil de moulage présente au moins la température de veille, jusque dans la plage de températures de production par un apport de chaleur supplémentaire, dans laquelle la plage de températures de production se situe entre la température de production minimale et la température de production maximale, dans laquelle, une fois atteinte la température de production minimale dans l'outil de moulage, un processus de moulage peut être démarré et l'au moins un dispositif de chauffage est conçu pour maintenir l'apport de chaleur supplémentaire dans l'outil de moulage uniquement pendant le processus de moulage.
